# EUROPEAN PATENT SPECIFICATION

(11) **EP 4 401 271 B1**
(45) Date of publication and mention of the grant of the patent: **04.03.2026**
(21) Application number: 22866760.6
(22) Date of filing: 09.09.2022
(51) Int. Cl.: H02J 7/00, B60L 53/16, B60L 53/66

(54) **CHARGING WAKE-UP CIRCUIT, CHARGING SEAT AND ELECTRIC VEHICLE**
LADEWECKSCHALTUNG, LADESITZ UND ELEKTROFAHRZEUG
CIRCUIT D'ACTIVATION DE CHARGE, SIÈGE DE CHARGE ET VÉHICULE ÉLECTRIQUE

(30) Priority: 10.09.2021 CN 202122196490 U
(43) Date of publication of application: 17.07.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Habermann, Hruschka & Schnabel
(86) International application number: PCT/CN2022/118133
(87) International publication number: WO 2023/036299

(56) References cited:
- CN-A- 103 857 554
- CN-A- 110 267 843
- CN-U- 211 519 274
- CN-U- 215 897 346
- JP-A- 2010 110 068
- JP-A- 2010 110 068
- US-A1- 2018 339 596

## Description

The present application claims priority to Chinese Patent Application NO. 202122196490.5, filed on September 10, 2021, and entitled "CHARGING WAKE-UP CIRCUIT, CHARGING SOCKET AND ELECTRIC VEHICLE".

### TECHNICAL FIELD

The present disclosure relates to the technical field of electric vehicle charging, and in particular to a charging wake-up circuit, a charging socket and an electric vehicle.

### BACKGROUND

With the development of science and technology and the increasingly severe energy problems, new energy gradually grows into the backbone of resources, and in terms of the automotive field, electric vehicle technology has developed rapidly under the support and advocacy of new energy technology by the state.

New energy vehicles are usually equipped with power batteries to output power, and the power battery may be a lithium battery. A BMS (Battery Management System) is the core of the power battery, which is responsible for controlling charging and discharging of the power battery and implementing battery state estimation and other functions.

The power supply in a charging pile is connected with the power grid, obtains electric energy from the power grid, and converts the alternating current obtained from the power grid into direct current for charging use. The charging pile includes at least a control assembly and a power supply in the interior. The control assembly can receive request information sent by the BMS of the electric vehicle, and can send a corresponding control signal to control connection between the power supply and the electric vehicle at different power supply stages according to the actual operation.

The charging socket is a device installed on the electric vehicle and used to be connected to a charging interface of the charging pile. It is usually necessary to wake up the charging socket before further judging whether the power battery needs to be charged by the charging pile. At present, the method of waking up the charging socket is usually to wake up a CAN (Controller Area Network) chip of the electric vehicle first by a hard-wire signal, and then wake up the on-board charging socket by the CAN chip. The response speed is slow, and the signal transmitted through the CAN bus has poor anti-interference ability, which may lead to unstable signal transmission. A method for operating an electric charging control device is known from the prior art, for example from US2018/339596A1.

### SUMMARY

The present invention is defined by the independent claims. Further embodiments are set forth in the dependent claims. Any references to inventions or embodiments not falling within the scope of the independent claims are to be interpreted as examples useful for understanding the invention. Embodiments of the present disclosure provide a charging wake-up circuit, which is used to solve the problems of slow wake-up response speed of the charging socket and unstable wake-up signal transmission.

The embodiments of the present disclosure provide the specific technical solution as follows.

In a first aspect, a charging wake-up circuit is provided, which is applied to an electric vehicle and includes:
a state signal detection unit configured to generate a state input signal based on an open/closed state of a charging socket cover of the electric vehicle; and
a wake-up signal output unit, an input end of the wake-up signal output unit being connected to an output end of the state signal detection unit, and an output end of the wake-up signal output unit being connected to a charging socket control unit of the electric vehicle, and the wake-up signal output unit being configured to output, based on the state input signal, a change in a level signal to serve as a wake-up signal for the charging socket control unit.

In a second aspect, a charging socket is provided, which includes a charging wake-up circuit according to the above embodiment, to solve the problems of slow wake-up response speed of the charging socket and unstable wake-up signal transmission.

In a third aspect, an electric vehicle is provided, which includes a charging socket described above, to solve the problems of slow wake-up response speed of the charging socket and unstable wake-up signal transmission.

The present disclosure has the advantageous effects as below:

In the embodiment of the present disclosure, the state signal detection unit of the charging wake-up circuit is configured to generate a state input signal based on an open/closed state of a charging socket cover of an electric vehicle; the wake-up signal output unit is configured to output, based on the state input signal, a change in a level signal to serve as a wake-up signal for the charging socket control unit. The wake-up signal output unit is directly connected to a Micro-control Unit (MCU) of the charging socket, without the need to achieve to wake up the charging socket via the CAN bus of the electric vehicle. That is to say, the user can directly wake up the charging socket through the operation on a cover of the charging socket. The charging wake-up circuit according to the embodiment of the present disclosure has low costs, is low in power consumption and has good anti-interference performance, and the charging socket control unit can directly acquire the wake-up signal, so that the response speed is high.

### BRIEF DESCRIPTION OF THE DRAWINGS

In order to more clearly illustrate the technical solution in the embodiments of the present disclosure, drawings that need to be used in illustration of the embodiments will be simply introduced below, obviously the drawings in the following description are merely some embodiments of the appending claims.

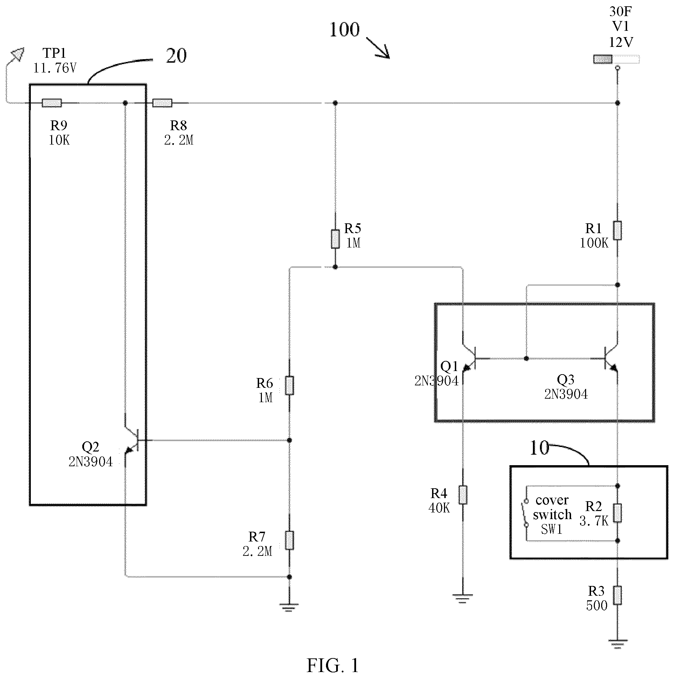

FIG. 1 is a structural schematic diagram of a charging wake-up circuit according to the embodiment of the present disclosure.

### DESCRIPTION OF EMBODIMENTS

In order to realize fast wake up of the charging socket, and at the same time to realize low power consumption of the circuit and stability of wake up signal transmission, the embodiments of the present disclosure provide a charging wake-up circuit, a charging socket and an electric vehicle.

The exemplary embodiments of the present disclosure are described below in conjunction with the drawings of the specification. It should be understood that the exemplary embodiments described herein are used only to illustrate and interpret the present disclosure, not to limit the present disclosure, and that the embodiments in the present disclosure and features in the embodiments may be combined with each other without conflict.

### First embodiment

Referring to FIG. 1, which is a structural schematic diagram of a charging wake-up circuit according to the embodiment of the present disclosure, the charge wake-up circuit according to the embodiment of the present disclosure is illustrated below in details in combination with FIG. 1.

As shown in FIG. 1, the charging wake-up circuit 100 according to this embodiment is used for an electric vehicle and specifically includes a state signal detection unit 10 and a wake-up signal output unit 20. The state signal detection unit 10 is configured to generate a state input signal based on an open state and a closed state of a charging socket cover of the electric vehicle. An input end of the wake-up signal output unit 20 is connected to an output end of the state signal detection unit 10, an output end of the wake-up signal output unit 20 is connected to a charging socket control unit of the electric vehicle, and the wake-up signal output unit is configured to output, based on the state input signal, a change in a level signal to serve as a wake-up signal for the charging socket control unit.

It should be noted that the charging socket control unit may be an MCU. It can be understood that when the operator connects the power supply of the charging pile to the charging socket through a charging gun, the action to the charging socket cover may be triggered. Thus, the MCU of the charging seat can be directly woken up by a change in the open/closed state of the charging socket cover.

In addition, since the control assembly in the charging pile can receive request information sent by the BMS of the electric vehicle, and can send a corresponding control signal to control connection between the power supply and the electric vehicle under different power supply stages according to the actual operation, after the charging socket is woken up, if it is necessary to supply power to the power battery (accumulator) in the electric vehicle, after the BMS sends a charging request signal to the control assembly of the charging pile, the control assembly sends a charging connection signal to the MCU of the charging socket, and then the MCU determines whether to connect the power supply of the charging pile to the power battery of the electric vehicle to achieve charging.

The charging wake-up circuit 100 according to the present disclosure has low costs, is low in power consumption and has good anti-interference performance, and the charging socket control unit can directly acquire the wake-up signal, that the response speed is high.

Specifically, the state signal detection unit 10 includes a control switch SW1 and a second resistor R2. The control switch SW1 is connected in parallel with the second resistor R2. One end of the second resistor R2 is connected to an on-board power supply of the electric vehicle and the input end of the wake-up signal output unit 20 respectively, and the other end of the second resistor R2 is grounded.

It can be understood that the control switch SW1 and the second resistor R2 are used to simulate the open/closed state of the charging socket cover.

The control switch SW1 may be configured to be turned off when the charging socket cover is in the closed state; and to be turned on when the charging socket cover is in the open state.

Correspondingly, the wake-up signal output unit 20 may be configured to: output a high-level signal as a wake-up signal for the charging socket control unit when the control switch SW1 is in an off state, that is, when the charging socket cover is in the closed state; and output a low-level signal as the wake-up signal for the charging socket control unit when the control switch SW1 is in an on state, that is, when the charging socket cover is in the open state.

Thus, based on the change of the high-level signal and low-level signal, the MCU of the charging socket can be woken up.

Specifically, the charging wake-up circuit 100 of the present disclosure further includes a state signal stabilization unit. An input end of the state signal stabilization unit is connected to the output end of the state signal detection unit 10, and an output end of the state signal stabilization unit is connected to the input end of the wake-up signal output unit 20, for stabilizing the state input signal.

As shown in FIG. 1, the state signal stabilization unit includes a first transistor Q1 and a third transistor Q3. The first transistor Q1 and the third transistor Q3 constitute a proportional constant-current source configured to provide a constant-current state input signal to the wake-up signal output unit 20.

More specifically, the state signal stabilization unit further includes a fourth resistor R4 and a third resistor R3. The fourth resistor R4 serves as a negative feedback resistor for the first transistor Q1, and the third resistor R3 and the second resistor R2 serve as negative feedback resistors for the third transistor Q3 based on the on and off of the control switch SW1, for stabilizing an operating point of the proportional constant-current source.

More specifically, the state signal stabilization unit further includes a first resistor R1, one end of the first resistor R1 is connected to the on-board power supply (in this embodiment, the voltage of the on-board power supply is 12 V, and the on-board power supply supplies power continuously to the charging wake-up circuit 100), and the other end of the first resistor R1 is connected to a first switching end of the third transistor Q3, a second switching end of the third transistor Q3 is connected to one end of the second resistor R2, and the other end of the second resistor R2 is connected to one end of the third resistor R3, and the other end of the third resistor R3 is grounded. A first control end of the first transistor Q1 is connected to a second control end of the third transistor Q3, a first switching end of the first transistor Q1 is connected to the input end of the wake-up signal output unit 20, and a second switching end of the first transistor Q1 is grounded via the fourth resistor R4. A common end of the first control end and the second control end is connected between the first resistor R1 and the first switching end of the third transistor Q3. Thus, the wake-up signal output unit 20 outputs a relatively stable state input signal.

In this embodiment, the resistance value of the first resistor R1 may be selected in the range of 0.5 MΩ to 1.2 MΩ (including the endpoint values). The resistance value of the second resistor R2 can be selected in the range of 3.3 KΩ to 4 KΩ (including the endpoint values).

In this embodiment, the first transistor Q1 and the third transistor Q3 are NPN triodes with the same characteristics, as shown in FIG. 1. Therefore, it can be understood that the first switching end of the first transistor Q1 is a collector of a first triode, the second switching end of the first transistor Q1 is an emitter of the first triode, and the first control end of the first transistor Q1 is a base of the first triode. Similarly, the first switching end of the second transistor Q2 is a collector of a second triode, the second switching end of the second transistor Q2 is an emitter of the second triode, and a third control end of the second transistor Q2 is a base of the second triode.

More specifically, the wake-up signal output unit 20 further includes a second transistor Q2, the third control end of the second transistor Q2 may be connected to the first switching end of the first transistor Q1 via a sixth resistor R6, the first switching end of the second transistor Q2 may be connected to a signal input end of the charging socket control unit via a ninth resistor R9, and the second switching end of the second transistor Q2 is grounded.

In this embodiment, the second transistor Q2 is a NPN triode. Therefore, it can be understood that the base of the second triode is connected to the collector of the first triode via the sixth resistor R6, the collector of the second triode is connected to the signal input end of the charging socket control unit via the ninth resistor R9, and the emitter of the second triode is grounded.

Therefore, it can be further understood that in this embodiment, when the control switch SW1 is in the off state, that is, when the charging socket cover is closed, the second resistor R2 is connected into the charging wake-up circuit 100, thus, the current flowing through the third transistor Q3 is very low, and the current flowing through the first transistor Q1 is also very low, which then causes the second transistor Q2 to be turned off, to output a high-level to the MCU of the charging socket via the ninth resistor R9 to wake up the charging socket.

Similarly, when the control switch SW1 is in the on state, that is, when the charging socket cover is open, the second resistor R2 is not connected into the charging wake-up circuit 100, thus, the current flowing through the third transistor Q3 is relatively high, and the current flowing through the first transistor Q1 is also relatively high, which then causes the second transistor Q2 to be turned on, to output a low-level to the MCU of the charging socket via the ninth resistor R9 to wake up the charging socket.

Therefore, the charging socket can be woken up by the changing of the high-level signal and low-level signal of the MCU port.

Further, the charging wake-up circuit 100 of the present disclosure further includes a seventh resistor R7, a third control end (i.e., a base) of the second transistor Q2 is also grounded via the seventh resistor R7 to be able to provide an appropriate forward-bias to the emitter of the second transistor Q2.

Further, the charging wake-up circuit 100 of the present disclosure further includes a fifth resistor R5, one end of the fifth resistor R5 is connected to an on-board power supply of 12 V, and the other end of the fifth resistor R5 is connected to the sixth resistor R6 and the first switching end of the first transistor Q1 respectively.

Further, the charging wake-up circuit 100 of the present disclosure further includes an eighth resistor R8, one end of the eighth resistor R8 is connected to the on-board power supply of 12 V, and the other end of the eighth resistor R8 is connected to the ninth resistor R9, thus providing the MCU of the charging socket with an appropriate working voltage.

From the above illustration of the charging wake-up circuit 100 of this embodiment, it can be seen that the power supply voltage of 12V exists all the time, and the current consumption needs to be reduced in order to achieve the low power consumption of the circuit. Specifically, the charging wake-up circuit 100 of this embodiment can be divided into four branches, namely, a first branch, which refers to that the power supply is output to the MCU of the charging socket via the eighth resistor R8 and the ninth resistor R9, and because the pin of the MCU is set to be in a high impedance state, the current consumption is very little; a second branch, which refers to that the control of second transistor Q2 to be turned on and off is achieved through this branch including the fifth resistor R5, the sixth resistor R6 and the seventh resistor R7, therefore, it is necessary to set a resistor with an appropriate high resistance value to reduce loss, and the fifth resistor R5 is set in a range of 0.5 MΩ to 1.2 MΩ (including the endpoint values), the sixth resistor R6 may also be set in a range of 0.5 MΩ to 1.2 MΩ (including the endpoint values), the seventh resistance R7 may be set in a range of 2 MΩ to 3 MΩ (including the endpoint values); a third branch, which refers to : a branch including the fifth resistor R5, the first transistor Q1 and the fourth resistor R4, and because when the control switch SW1 is turned off, equivalent to that the first transistor Q1 is turned off, basically no current flows through, therefore, the consumption is little; a fourth branch, which refers to a branch including the first resistor R1, the third transistor Q3, the second resistor R2 and the third resistor R3, in which when the control switch SW1 is turned off, equivalent to that the third transistor Q3 is turned off, and basically no current flows through. Therefore, the charging wake-up circuit 100 of this embodiment has low power consumption.

In the charging wake-up circuit 100 of this embodiment, the appropriate second resistor R2 is selected first, for example, the resistance value of the second resistor R2 is 3.7 kΩ, and then the resistance values of the first resistor R1, the fifth resistor R5, the sixth resistor R6 and the seventh resistor R7 are selected based on the resistance value of the second resistor R2. In this embodiment, the resistance value of the first resistor R1 is 1 MΩ, the resistance value of the fifth resistor R5 is 1 MΩ, the resistance value of the sixth resistor R6 is 1 MΩ, and the resistance value of the seventh resistor R7 is 2.2 MΩ.

Since in the charging wake-up circuit 100 of this embodiment, the first transistor Q1, the second transistor Q2 and the third transistor Q3 are all NPN triodes, the on-off performance of the NPN triodes determines that the wake-up signal output unit 20 is configured to output a high-level signal as a wake-up signal for the charging socket control unit when the control switch SW1 is in the off state, and to output a low-level signal as the wake-up signal for the charging socket control unit when the control switch SW1 is in the on state.

Of course it can also be understood that in other embodiments, by changing the type (such as PNP type) of the first transistor Q1, the second transistor Q2 and the third transistor Q3, the wake-up signal output unit 20 may be configured to output a low-level signal as a wake-up signal for the charging socket control unit when the control switch SW1 is in the off state, and to output a high-level signal as the wake-up signal for the charging socket control unit when the control switch SW1 is in the on state.

That is, the first transistor Q1 may be a NPN triode or a PNP triode or a field effect transistor; the second transistor Q2 may be a NPN triode or a PNP triode or a field effect transistor; the third transistor Q3 may be a NPN triode or a PNP triode or a field effect transistor.

In this embodiment, the control switch SW1 is configured to be turned off when the charging socket cover is in the closed state, and to be turned on when the charging socket cover is in the open state. That is, off and on of the control switch SW1 are inversely corresponding to the opening and closing of the charging socket cover (opening of the charging socket cover corresponds to that the control switch SW1 is turned on).

Therefore, it can be understood that, in a further embodiment, the control switch SW1 may also be configured to be turned on when the charging socket cover is in the closed state, and to be turned off when the charging socket cover is in the open state. That is, off and on of the control switch SW1 are forward corresponding to the opening and closing of the charging socket cover (opening of the charging socket cover corresponds to that the control switch SW1 is turned off).

Therefore, further, the corresponding wake-up signal output unit 20 may also be configured to: output a high-level signal as a wake-up signal for the charging socket control unit when the control switch SW1 is in an off state; and output a low-level signal as the wake-up signal for the charging socket control unit when the control switch SW1 is in an on state.

Of course, in a further embodiment, correspondingly the wake-up signal output unit 20 may also be configured to: output a low-level signal as a wake-up signal for the charging socket control unit when the control switch SW1 is in an off state; and output a high-level signal as the wake-up signal for the charging socket control unit when the control switch SW1 is in an on state.

In other words, the present disclosure does not define that the off and on of the control switch SW1 corresponds to a high or low level signal, and instead defines that a change in the state of the control switch SW1 causes a change in the level signal to trigger the MCU of the charging socket to be woken up.

### Second embodiment

This embodiment provides a charging socket including the charging wake-up circuit 100 according to any one of the above embodiments. For the sake of simplicity, the same contents are not repeated. According to the charging socket of the present disclosure, the state signal detection unit of the charging wake-up circuit is configured to generate a state input signal based on an open/closed state of a charging socket cover of an electric vehicle; the wake-up signal output unit is configured to output, based on the state input signal, a change in a level signal to serve as a wake-up signal for the charging socket control unit. The wake-up signal output unit is directly connected to the charging socket control unit, without the need to achieve to wake up the charging socket via the CAN bus of the electric vehicle. That is to say, the user can directly wake up the charging socket through the operation on a cover of the charging socket. The charging wake-up circuit according to the embodiment of the present disclosure has low costs, is low in power consumption and has good anti-interference performance, and the charging socket control unit can directly acquire the wake-up signal, that the response speed is high.

### Third embodiment

This embodiment provides an electric vehicle including a charging socket as described above. For the sake of simplicity, the same contents are not repeated. According to the electric vehicle of the present disclosure, the state signal detection unit of the charging wake-up circuit is configured to generate a state input signal based on an open/closed state of a charging socket cover of an electric vehicle; the wake-up signal output unit is configured to output, based on the state input signal, a change in a level signal to serve as a wake-up signal for the charging socket control unit. The wake-up signal output unit is directly connected to a control unit of the charging socket, without the need to achieve to wake up the charging socket via the CAN bus of the electric vehicle. That is to say, the user can directly wake up the charging socket through the operation on a cover of the charging socket. The charging wake-up circuit according to the embodiment of the present disclosure has low costs, is low in power consumption and has good anti-interference performance, and the charging socket control unit can directly acquire the wake-up signal, that the response speed is high.

Obviously, those skilled in the art may make various changes and modifications to the embodiments of the present disclosure without deviating from the scope of the appending claims.

## Claims

1. A charging wake-up circuit, wherein the charging wake-up circuit is applied to an electric vehicle, and comprises:
a state signal detection unit (10) configured to generate a state input signal based on an open state and a closed state of a charging socket cover of the electric vehicle; and
a wake-up signal output unit (20), wherein an input end of the wake-up signal output unit (20) is connected to an output end of the state signal detection unit (10), and an output end of the wake-up signal output unit (20) is connected to a charging socket control unit of the electric vehicle, and the wake-up signal output unit (20) is configured to output, based on the state input signal, a change in a level signal to serve as a wake-up signal for the charging socket control unit,
**characterized in that** the charging wake-up circuit further comprises a state signal stabilization unit, wherein an input end of the state signal stabilization unit is connected to an output end of the state signal detection unit (10), and an output end of the state signal stabilization unit is connected to the input end of the wake-up signal output unit (20), for stabilizing the state input signal; wherein the state signal detection unit (10) comprises a control switch (SW1) and a second resistor (R2), the control switch (SW1) is connected in parallel with the second resistor (R2), one end of the second resistor (R2) is connected to an on-board power supply of the electric vehicle and the input end of the wake-up signal output unit (20) respectively, and the other end of the second resistor (R2) is grounded;
the state signal stabilization unit comprises a first transistor (Q1), a third transistor (Q3), a first resistor (R1), a fourth resistor (R4) and a third resistor (R3), the first transistor (Q1) and the third transistor (Q3) constitute a proportional constant-current source configured to provide a constant-current state input signal to the wake-up signal output unit (20); the fourth resistor (R4) serves as a negative feedback resistor for the first transistor (Q1), and the third resistor (R3) and the second resistor (R2) serve as negative feedback resistors for the third transistor (Q3) based on the on and off of the control switch (SW1), one end of the first resistor (R1) is connected to the on-board power supply, and the other end of the first resistor (R1) is connected to a first switching end of the third transistor (Q3), a second switching end of the third transistor (Q3) is connected to one end of the second resistor (R2), and the other end of the second resistor (R2) is connected to one end of the third resistor (R3), and the other end of the third resistor (R3) is grounded; a first control end of the first transistor (Q1) is connected to a second control end of the third transistor (Q3), a first switching end of the first transistor (Q1) is connected to the input end of the wake-up signal output unit (20), and a second switching end of the first transistor (Q1) is grounded via the fourth resistor (R4); a common port of the first control end and the second control end is connected between the first resistor (R1) and the first switching end of the third transistor (Q3),
wherein the wake-up signal output unit (20) comprises a second transistor (Q2), a third control end of the second transistor (Q2) is connected to the first switching end of the first transistor (Q1) via a sixth resistor (R6), a first switching end of the second transistor (Q2) is connected to a signal input end of the charging socket control unit via a ninth resistor (R9), and a second switching end of the second transistor (Q2) is grounded, and the charging socket control unit is a Micro-control Unit (MCU) of a charging socket,
wherein the charging wake-up circuit further comprises a fifth resistor (R5), a seventh resistor (R7), and an eighth resistor (R8), one end of the fifth resistor (R5) is connected to the on-board power supply, and the other end of the fifth resistor (R5) is connected to the sixth resistor (R6) and the first switching end of the first transistor (Q1) respectively, the third control end is grounded via the seventh resistor (R7), and one end of the eighth resistor (R8) is connected to the on-board power supply, and the other end of the eighth resistor (R8) is connected to the ninth resistor (R9).

2. The charging wake-up circuit according to claim 1, wherein the control switch (SW1) is configured to be turned off when the charging socket cover is in a closed state, and to be turned on when the charging socket cover is in an open state.

3. The charging wake-up circuit according to claim 2, wherein the wake-up signal output unit (20) is configured to: output a high-level signal as a wake-up signal for the charging socket control unit when the control switch (SW1) is in an off state; and output a low-level signal as the wake-up signal for the charging socket control unit when the control switch (SW1) is in an on state;
or
the wake-up signal output unit (20) is configured to: output a low-level signal as a wake-up signal for the charging socket control unit when the control switch (SW1) is in an off state; and output a high-level signal as the wake-up signal for the charging socket control unit when the control switch (SW1) is in an on state.

4. The charging wake-up circuit according to claim 1, wherein the control switch (SW1) is configured to be turned on when the charging socket cover is in a closed state, and to be turned off when the charging socket cover is in an open state.

5. The charging wake-up circuit according to claim 4, wherein the wake-up signal output unit (20) is configured to: output a high-level signal as a wake-up signal for the charging socket control unit when the control switch (SW1) is in an off state; and output a low-level signal as the wake-up signal for the charging socket control unit when the control switch (SW1) is in an on state;
or
the wake-up signal output unit (20) is configured to: output a low-level signal as a wake-up signal for the charging socket control unit when the control switch (SW1) is in an off state; and output a high-level signal as the wake-up signal for the charging socket control unit when the control switch (SW1) is in an on state.

6. The charging wake-up circuit according to claim 1, wherein the first transistor (Q1) is a NPN triode or a PNP triode or a field effect transistor; the second transistor (Q2) is a NPN triode or a PNP triode or a field effect transistor; and the third transistor (Q3) is a NPN triode or a PNP triode or a field effect transistor.

7. The charging wake-up circuit according to claim 1, wherein the first resistor (R1) has a resistance value of 0.5 MΩ to 1.2 MΩ.

8. The charging wake-up circuit according to claim 1, wherein the second resistor (R2) has a resistance value of 3.3 KΩ to 4 KΩ.

9. The charging wake-up circuit according to claim 1, wherein the fifth resistor (R5) has a resistance value of 0.5 MΩ to 1.2 MΩ; and the sixth resistor (R6) has a resistance value of 0.5 MΩ to 1.2 MQ;
or
wherein the seventh resistor (R7) has a resistance value of 2 MΩ to 3 MΩ.

10. A charging socket, comprising a charging wake-up circuit according to any one of claims 1 to 9.

11. An electric vehicle, comprising the charging socket according to claim 10.

## Patentansprüche

1. Ladeweckschaltung, wobei die Ladeweckschaltung in einem Elektrofahrzeug zum Einsatz kommt und aufweist:
eine Zustandssignal-Erfassungseinheit (10), die so konfiguriert ist, dass sie ein Zustandseingangssignal basierend auf einem offenen Zustand und einem geschlossenen Zustand einer Ladesitzabdeckung des Elektrofahrzeugs erzeugt; und
eine Wecksignal-Ausgabeeinheit (20), wobei ein Eingangsende der Wecksignal-Ausgabeeinheit (20) mit einem Ausgangsende der Zustandssignal-Erfassungseinheit (10) verbunden ist, und ein Ausgangsende der Wecksignal-Ausgabeeinheit (20) mit einer Ladesitz-Steuereinheit des Elektrofahrzeugs verbunden ist, und die Wecksignal-Ausgabeeinheit (20) so konfiguriert ist, dass sie auf der Grundlage des Zustandseingangssignals eine Änderung eines Pegelsignals ausgibt, das als Wecksignal für die Ladesitz-Steuereinheit dient,
**dadurch gekennzeichnet, dass** die Ladeweckschaltung ferner eine Zustandssignal-Stabilisierungseinheit aufweist, wobei ein Eingangsende der Zustandssignal-Stabilisierungseinheit mit einem Ausgangsende der Zustandssignal-Erfassungseinheit (10) verbunden ist und ein Ausgangsende der Zustandssignal-Stabilisierungseinheit mit dem Eingangsende der Wecksignal-Ausgabeeinheit (20) verbunden ist, zum Stabilisieren des Zustandseingangssignals; wobei die Zustandssignal-Erfassungseinheit (10) einen Steuerschalter (SW1) und einen zweiten Widerstand (R2) aufweist, wobei der Steuerschalter (SW1) parallel zum zweiten Widerstand (R2) geschaltet ist, wobei ein Ende des zweiten Widerstands (R2) mit einer Bordstromversorgung des Elektrofahrzeugs bzw. mit dem Eingangsende der Wecksignal-Ausgabeeinheit (20) verbunden ist und das andere Ende des zweiten Widerstands (R2) geerdet ist; die Zustandssignal-Stabilisierungseinheit einen ersten Transistor (Q1), einen dritten Transistor (Q3), einen ersten Widerstand (R1), einen vierten Widerstand (R4) und einen dritten Widerstand (R3) aufweist, der erste Transistor (Q1) und der dritte Transistor (Q3) eine Proportional-Konstantstromquelle bilden, die so konfiguriert ist, dass sie ein Konstantstrom-Zustandseingangssignal an die Wecksignal-Ausgabeeinheit (20) liefert; der vierte Widerstand (R4) als negativer Rückkopplungswiderstand für den ersten Transistor (Q1) dient, und der dritte Widerstand (R3) und der zweite Widerstand (R2) als negative Rückkopplungswiderstände für den dritten Transistor (Q3) basierend auf dem Ein- und Ausschalten des Steuerschalters (SW1) dienen, ein Ende des ersten Widerstands (R1) mit der integrierten Stromversorgung verbunden ist, und das andere Ende des ersten Widerstands (R1) mit einem ersten Schaltende des dritten Transistors (Q3) verbunden ist, ein zweites Schaltende des dritten Transistors (Q3) mit einem Ende des zweiten Widerstands (R2) verbunden ist, und das andere Ende des zweiten Widerstands (R2) mit einem Ende des dritten Widerstands (R3) verbunden ist, und das andere Ende des dritten Widerstands (R3) geerdet ist; ein erstes Steuerende des ersten Transistors (Q1) mit einem zweiten Steuerende des dritten Transistors (Q3) verbunden ist, ein erstes Schaltende des ersten Transistors (Q1) mit dem Eingangsende der Wecksignal-Ausgabeeinheit (20) verbunden ist, und ein zweites Schaltende des ersten Transistors (Q1) über den vierten Widerstand (R4) geerdet ist; ein gemeinsamer Anschluss des ersten Steuerungsendes und des zweiten Steuerungsendes zwischen dem ersten Widerstand (R1) und dem ersten Schaltende des dritten Transistors (Q3) angeschlossen ist,
wobei die Wecksignal-Ausgabeeinheit (20) einen zweiten Transistor (Q2) aufweist, ein drittes Steuerende des zweiten Transistors (Q2) über einen sechsten Widerstand (R6) mit dem ersten Schaltende des ersten Transistors (Q1) verbunden ist, ein erstes Schaltende des zweiten Transistors (Q2) über einen neunten Widerstand (R9) mit einem Signaleingangsende der Ladesitz-Steuereinheit verbunden ist und ein zweites Schaltende des zweiten Transistors (Q2) geerdet ist, und die Ladesitz-Steuereinheit eine Mikrosteuerungseinheit (MCU) eines Ladesitzes ist,
wobei die Ladeweckschaltung ferner einen fünften Widerstand (R5), einen siebten Widerstand (R7) und einen achten Widerstand (R8) aufweist, wobei ein Ende des fünften Widerstands (R5) jeweils über den siebten Widerstand (R7) mit der Bordstromversorgung verbunden und das andere Ende des fünften Widerstands (R5) mit dem sechsten Widerstand (R6) und dem ersten Schaltende des ersten Transistors (Q1) verbunden ist, das dritte Steuerende über den siebten Widerstand (R7) geerdet ist, und ein Ende des achten Widerstands (R8) mit der Bordstromversorgung verbunden ist, und das andere Ende des achten Widerstands (R8) mit dem neunten Widerstand (R9) verbunden ist.

2. Ladeweckschaltung nach Anspruch 1, bei der der Steuerschalter (SW1) so konfiguriert ist, dass er ausgeschaltet wird, wenn sich die Ladesitzabdeckung in einem geschlossenen Zustand befindet, und eingeschaltet wird, wenn sich die Ladesitzabdeckung in einem offenen Zustand befindet.

3. Ladeweckschaltung nach Anspruch 2, bei der die Wecksignal-Ausgabeeinheit (20) so konfiguriert ist, dass sie: ein Hochpegelsignal als Wecksignal für die Ladesitz-Steuereinheit ausgibt, wenn sich der Steuerschalter (SW1) in einem ausgeschalteten Zustand befindet; und ein Niedrigpegelsignal als Wecksignal für die Ladesitz-Steuereinheit ausgibt, wenn sich der Steuerschalter (SW1) in einem eingeschalteten Zustand befindet;
oder
die Wecksignal-Ausgabeeinheit (20) so konfiguriert ist, dass sie: ein Niedrigpegelsignal als Wecksignal für die Ladesitz-Steuereinheit ausgibt, wenn sich der Steuerschalter (SW1) in einem ausgeschalteten Zustand befindet; und ein Hochpegelsignal als Wecksignal für die Ladesitz-Steuereinheit ausgibt, wenn sich der Steuerschalter (SW1) in einem eingeschalteten Zustand befindet.

4. Ladeweckschaltung nach Anspruch 1, bei der der Steuerschalter (SW1) so konfiguriert ist, dass er eingeschaltet wird, wenn die Ladesitzabdeckung geschlossen ist, und ausgeschaltet wird, wenn die Ladesitzabdeckung geöffnet ist.

5. Ladeweckschaltung nach Anspruch 4, bei der die Wecksignal-Ausgabeeinheit (20) so konfiguriert ist, dass sie: ein Hochpegelsignal als Wecksignal für die Ladesitz-Steuereinheit ausgibt, wenn sich der Steuerschalter (SW1) im ausgeschalteten Zustand befindet; und ein Niedrigpegelsignal als Wecksignal für die Ladesitz-Steuereinheit ausgibt, wenn sich der Steuerschalter (SW1) im eingeschalteten Zustand befindet; oder
die Wecksignal-Ausgabeeinheit (20) so konfiguriert ist, dass sie: ein Niedrigpegelsignal als Wecksignal für die Ladesitz-Steuereinheit ausgibt, wenn sich der Steuerschalter (SW1) im ausgeschalteten Zustand befindet; und ein Hochpegelsignal als Wecksignal für die Ladesitz-Steuereinheit ausgibt, wenn sich der Steuerschalter (SW1) im eingeschalteten Zustand befindet.

6. Ladeweckschaltung nach Anspruch 1, bei der der erste Transistor (Q1) ein NPN-Trioden- oder ein PNP-Trioden- oder ein Feldeffekttransistor ist; der zweite Transistor (Q2) ein NPN-Trioden- oder ein PNP-Trioden- oder ein Feldeffekttransistor ist; und der dritte Transistor (Q3) ein NPN-Trioden- oder ein PNP-Trioden- oder ein Feldeffekttransistor ist.

7. Ladeweckschaltung nach Anspruch 1, bei der der erste Widerstand (R1) einen Widerstandswert von 0,5 MΩ bis 1,2 MΩ aufweist.

8. Ladeweckschaltung nach Anspruch 1, bei der der zweite Widerstand (R2) einen Widerstandswert von 3,3 KΩ bis 4 KΩ aufweist.

9. Ladeweckschaltung nach Anspruch 1, bei der der fünfte Widerstand (R5) einen Widerstandswert von 0,5 MΩ bis 1,2 MΩ aufweist und der sechste Widerstand (R6) einen Widerstandswert von 0,5 MΩ bis 1,2 MΩ aufweist;
oder
der siebte Widerstand (R7) einen Widerstandswert von 2 MΩ bis 3 MΩ aufweist.

10. Ladesitz, der eine Ladeweckschaltung gemäß einem der Ansprüche 1 bis 9 aufweist.

11. Elektrofahrzeug, aufweisend den Ladesitz nach Anspruch 10.

## Revendications

1. Circuit d'activation de charge, le circuit d'activation de charge étant utilisé dans un véhicule électrique et comprenant:
une unité de détection de signal d'état (10) configurée pour générer un signal d'entrée d'état basé sur un état ouvert et un état fermé d'un couvercle de siège de charge du véhicule électrique; et
une unité de sortie de signal d'activation (20), une extrémité d'entrée de l'unité de sortie de signal d'activation (20) étant connectée à une extrémité de sortie de l'unité de détection de signal d'état (10), et une extrémité de sortie de l'unité de sortie de signal d'activation (20) étant connectée à une unité de commande de siège de charge du véhicule électrique, et l'unité de sortie de signal d'activation (20) est configurée pour émettre, sur la base du signal d'entrée d'état, une modification d'un signal de niveau qui sert de signal d'activation pour l'unité de commande de siège de charge,
**caractérisé en ce que** le circuit d'activation de charge comprend en outre une unité de stabilisation de signal d'état, une extrémité d'entrée de l'unité de stabilisation de signal d'état étant connectée à une extrémité de sortie de l'unité de détection de signal d'état (10) et une extrémité de sortie de l'unité de stabilisation de signal d'état étant connectée à l'extrémité d'entrée de l'unité de sortie de signal d'activation (20) pour stabiliser le signal d'entrée d'état; l'unité de détection de signal d'état (10) comprenant un commutateur de commande (SW1) et une deuxième résistance (R2), le commutateur de commande (SW1) étant connecté en parallèle avec la deuxième résistance (R2), une extrémité de la deuxième résistance (R2) étant connectée à une alimentation électrique embarquée du véhicule électrique ou à l' extrémité d'entrée de l'unité de sortie de signal d'activation (20) et l'autre extrémité de la deuxième résistance (R2) étant mise à la terre;
l'unité de stabilisation du signal d'état comprend un premier transistor (Q1), un troisième transistor (Q3), une première résistance (R1), une quatrième résistance (R4) et une troisième résistance (R3), le premier transistor (Q1) et le troisième transistor (Q3) formant une source de courant constant proportionnelle configurée pour fournir un signal d'entrée d'état à courant constant à l'unité de sortie de signal d'activation (20); la quatrième résistance (R4) sert de résistance de rétroaction négative pour le premier transistor (Q1), et la troisième résistance (R3) et la deuxième résistance (R2) servent de résistances de rétroaction négative pour le troisième transistor (Q3) en fonction de l'activation et de la désactivation du commutateur de commande (SW1), une extrémité de la première résistance (R1) est connectée à l'alimentation électrique intégrée, et l'autre extrémité de la première résistance (R1) est connectée à une première extrémité de commutation du troisième transistor (Q3), une deuxième extrémité de commutation du troisième transistor (Q3) est connectée à une extrémité de la deuxième résistance (R2), et l'autre extrémité de la deuxième résistance (R2) est connectée à une extrémité de la troisième résistance (R3), et l'autre extrémité de la troisième résistance (R3) est mise à la terre; une première extrémité de commande du premier transistor (Q1) est connectée à une deuxième extrémité de commande du troisième transistor (Q3), une première extrémité de commutation du premier transistor (Q1) est connectée à l'extrémité d'entrée de l'unité de sortie du signal d'activation (20), et une deuxième extrémité de commutation du premier transistor (Q1) est mise à la terre via la quatrième résistance (R4); une connexion commune de la première extrémité de commande et de la deuxième extrémité de commande est connectée entre la première résistance (R1) et la première extrémité de commutation du troisième transistor (Q3),
l'unité de sortie du signal d'activation (20) comportant un deuxième transistor (Q2), une troisième extrémité de commande du deuxième transistor (Q2) étant reliée au premier transistor (Q1) par l'intermédiaire d'une sixième résistance (R6), une première extrémité de commutation du deuxième transistor (Q2) est reliée à une extrémité d'entrée de signal de l'unité de commande de siège de charge via une neuvième résistance (R9) et une deuxième extrémité de commutation du deuxième transistor (Q2) est mise à la terre, et l'unité de commande de siège de charge est une unité de microcontrôle (MCU) d'un siège de charge,
le circuit de charge comportant en outre une cinquième résistance (R5), une septième résistance (R7) et une huitième résistance (R8), une extrémité de la cinquième résistance (R5) étant reliée à l'alimentation électrique embarquée via la septième résistance (R7) et l'autre extrémité de la cinquième résistance (R5) étant reliée à la sixième résistance (R6) et à la première extrémité de commutation du premier transistor (Q1), la troisième extrémité de commande étant mise à la terre via la septième résistance (R7), et une extrémité de la huitième résistance (R8) étant connectée à l'alimentation électrique embarquée, et l'autre extrémité de la huitième résistance (R8) étant connectée à la neuvième résistance (R9).

2. Circuit d'activation de charge selon la revendication 1, dans lequel le commutateur de commande (SW1) est configuré pour être désactivé lorsque le couvercle du siège de charge est dans un état fermé et pour être activé lorsque le couvercle du siège de charge est dans un état ouvert.

3. Circuit d'activation de charge selon la revendication 2, dans lequel l'unité de sortie de signal d'activation (20) est configurée de manière à: émettre un signal de niveau haut comme signal d'activation pour l'unité de commande du siège de charge lorsque le commutateur de commande (SW1) est dans un état désactivé; et émettre un signal de niveau bas comme signal d'activation pour l'unité de commande du siège de charge lorsque le commutateur de commande (SW1) est dans un état activé;
ou
l'unité de sortie de signal d'activation (20) est configurée de manière à: émettre un signal de niveau bas comme signal d'activation pour l'unité de commande du siège de charge lorsque le commutateur de commande (SW1) est à l'état désactivé; et émettre un signal de niveau haut comme signal d'activation pour l'unité de commande du siège de charge lorsque le commutateur de commande (SW1) est dans un état activé.

4. Circuit d'activation de charge selon la revendication 1, dans lequel le commutateur de commande (SW1) est configuré de manière à être activé lorsque le couvercle du siège de charge est fermé et désactivé lorsque le couvercle du siège de charge est ouvert.

5. Circuit d'activation de charge selon la revendication 4, dans lequel l'unité de sortie de signal d'activation (20) est configurée de manière à: émettre un signal de niveau haut comme signal d'activation pour l'unité de commande du siège de charge lorsque le commutateur de commande (SW1) est à l'état désactivé; et émettre un signal de niveau bas comme signal d'activation pour l'unité de commande du siège de charge lorsque le commutateur de commande (SW1) est à l'état activé; ou
l'unité de sortie de signal d'activation (20) est configurée de manière à: émettre un signal de niveau bas comme signal d'activation pour l'unité de commande du siège de charge lorsque le commutateur de commande (SW1) est à l'état désactivé; et émettre un signal de niveau haut comme signal d'activation pour l'unité de commande du siège de charge lorsque le commutateur de commande (SW1) est à l'état activé.

6. Circuit d'activation de charge selon la revendication 1, dans lequel le premier transistor (Q1) est un transistor NPN à triode, PNP à triode ou à effet de champ; le deuxième transistor (Q2) est un transistor NPN triode ou PNP triode ou à effet de champ; et le troisième transistor (Q3) est un transistor NPN triode ou PNP triode ou à effet de champ.

7. Circuit d'activation de charge selon la revendication 1, dans lequel la première résistance (R1) a une valeur de résistance comprise entre 0,5 MΩ et 1,2 MΩ.

8. Circuit d'activation de charge selon la revendication 1, dans lequel la deuxième résistance (R2) présente une valeur de résistance comprise entre 3,3 KΩ et 4 KΩ.

9. Circuit d'activation de charge selon la revendication 1, dans lequel la cinquième résistance (R5) présente une valeur de résistance comprise entre 0,5 MΩ et 1,2 MΩ et la sixième résistance (R6) présente une valeur de résistance comprise entre 0,5 MΩ et 1,2 MΩ;
ou
la septième résistance (R7) présente une valeur de résistance comprise entre 2 MΩ et 3 MΩ.

10. Siège de charge comprenant un circuit d'activation de charge selon l'une des revendications 1 à 9.

11. Véhicule électrique comprenant le siège de charge selon la revendication 10.
